# EUROPEAN PATENT SPECIFICATION

(11) **EP 3 663 208 B1**
(45) Date of publication and mention of the grant of the patent: **17.11.2021**
(21) Application number: 19213436.9
(22) Date of filing: 04.12.2019
(51) Int. Cl.: B64D 37/32

(54) **CATALYST DEACTIVATION MONITORING OF CATALYTIC INERTING SYSTEM**
KATALYSATORDEAKTIVIERUNGSÜBERWACHUNG EINES KATALYTISCHEN INERTISIERUNGSSYSTEMS
SURVEILLANCE DE DÉSACTIVATION DE CATALYSEUR DE SYSTÈME D'INERTAGE CATALYTIQUE

(30) Priority: 07.12.2018 US 201816213315
(43) Date of publication of application: 10.06.2020
(73) Proprietor: Hamilton Sundstrand Corporation, Charlotte, NC 28217-4578 (US)
(72) Inventor: COCKS, Peter AT, South Glastonbury, CT 06073 (US); SMITH, Lance L., West Hartford, CT 06117 (US)
(74) Representative: Dehns

(56) References cited:
- FR-A1- 2 860 455
- US-A1- 2003 194 363
- US-A1- 2004 197 718
- US-A1- 2004 255 514

## Description

### BACKGROUND

The subject matter disclosed herein generally relates to fuel handling systems, and more particularly to monitoring the catalyst in a fuel tank inerting system such as used on aircraft.

It is recognized that fuel vapors within fuel tanks become combustible in the presence of oxygen. An inerting system decreases the probability of combustion of flammable materials stored in a fuel tank by maintaining a chemically non-reactive or inert gas, such as nitrogen-enriched air, in the fuel tank vapor space, also known as ullage. Three elements are required to initiate and sustain combustion: an ignition source (e.g., heat), fuel, and oxygen. Combustion may be prevented by reducing any one of these three elements. If the presence of an ignition source cannot be prevented within a fuel tank, then the tank may be made inert by: 1) reducing the oxygen concentration, 2) reducing the fuel concentration of the ullage to below the lower explosive limit (LEL), or 3) increasing the fuel concentration to above the upper explosive limit (UEL). Many systems reduce the risk of combustion by reducing the oxygen concentration by introducing an inert gas to the ullage, thereby displacing oxygen to avoid explosion or combustion.

It is known in the art to equip aircraft with an onboard inert gas generating system. Several types of inert gas generating systems are known including catalytic reactors. These systems require maintenance. Effective and efficient methods of monitoring and managing maintenance of these systems are needed. US 2003/0194363 relates to a chemical reactor and fuel processor.

### BRIEF DESCRIPTION

A fuel tank inerting system as defined by claim 1 and a method for managing the maintenance of said fuel tank inerting system as defined by claim 6 are herein disclosed. Further embodiments are defined by the dependent claims 2-5 and 7-10.

### BRIEF DESCRIPTION OF THE DRAWINGS

The following descriptions should not be considered limiting in any way. With reference to the accompanying drawings, like elements are numbered alike:
FIG. 1A is a schematic illustration of an aircraft that can incorporate various embodiments of the present disclosure;
FIG. 1B is a schematic illustration of a bay section of the aircraft of FIG. 1A;
FIG. 2 is a schematic illustration of an example embodiment of a fuel tank inerting system;
FIG. 3 is schematic of elements used to monitor catalyst deactivation according to one or more embodiments; and
FIGS. 4 and 5 are graphs showing a comparison of temperatures during catalyst deactivation.

### DETAILED DESCRIPTION

A detailed description of one or more embodiments of the disclosed apparatus and method are presented herein by way of exemplification and not limitation with reference to the Figures.

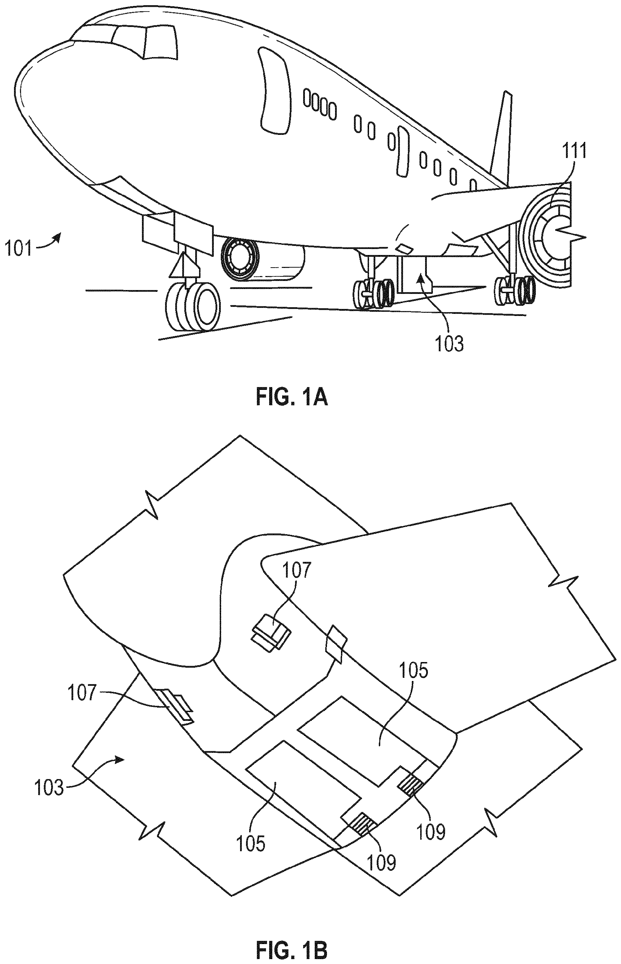

As shown in FIGS. 1A-1B, an aircraft 101 can include one or more bays 103 beneath a center wing box. The bay 103 can contain and/or support one or more components of the aircraft 101. For example, in some configurations, the aircraft 101 can include environmental control systems and/or fuel inerting systems within the bay 103. As shown in FIG. 1B, the bay 103 includes bay doors 105 that enable installation and access to one or more components (e.g., environmental control systems, fuel inerting systems, etc.). During operation of environmental control systems and/or fuel inerting systems of the aircraft 101, air that is external to the aircraft 101 can flow into one or more environmental control systems within the bay doors 105 through one or more ram air inlets 107. The air may then flow through the environmental control systems to be processed and supplied to various components or locations within the aircraft 101 (e.g., passenger cabin, fuel inerting systems, etc.). Some air may be exhausted through one or more ram air exhaust outlets 109.

Also shown in FIG. 1A, the aircraft 101 includes one or more engines 111. The engines 111 are typically mounted on wings of the aircraft 101, but may be located at other locations depending on the specific aircraft configuration. In some aircraft configurations, air can be bled from the engines 111 and supplied to environmental control systems and/or fuel inerting systems, as will be appreciated by those of skill in the art.

A function of fuel tank flammability reduction systems is accomplished by reacting a small amount of fuel vapor (e.g., a "first reactant") with a source of gas containing oxygen (e.g., a "second reactant"). The product of the reaction is carbon dioxide and water vapor. The source of the second reactant (e.g., air) can be bleed air or any other source of air containing oxygen, including, but not limited to, high-pressure sources (e.g., engine), bleed air, cabin air, etc. A catalyst material including, but not limited to, precious metal materials, is used to induce a chemical reaction. The carbon dioxide that results from the reaction is an inert gas that may be mixed with some remaining oxygen and nitrogen naturally found in fresh/ambient air, and directed back within a fuel tank to create an inert environment within the fuel tank, thus reducing a flammability of the vapors in the fuel tank.

A catalyst is used to induce a chemical reaction between oxygen (O₂) and fuel vapor to produce carbon dioxide (CO₂) and water vapor. The source of O₂ used in the reaction can come from any of a number of sources, including, but not limited to, pneumatic sources on an aircraft that supply air at a pressure greater than ambient. The fuel vapor is created by draining a small amount of fuel from an aircraft fuel tank into an evaporator container or by injecting and atomizing fuel into an air stream. The fuel can be heated to vaporize the fuel, such as by using an electric heater. The fuel vapor is removed from the evaporator container, in some embodiments, by an ejector which can induce a suction pressure that pulls the fuel vapor out of the evaporator container. Such ejectors can utilize elevated pressures of a second reactant source containing O₂ (e.g., a pneumatic source) to induce a secondary flow of the ejector which is sourced from the evaporator container. As such, the ejector can be used to mix the extracted fuel vapor with the O₂ from a second reactant source.

The mixed air stream (fuel vapor and oxygen or air) is then introduced to a catalyst, which induces a chemical reaction that transforms the O₂ and fuel vapor into CO₂ and water vapor. Any inert gas species that are present in the mixed stream (for example, nitrogen), will not react and will thus pass through the catalyst unchanged.

The catalyst in the catalytic reactor can become deactivated with time. To compensate for deactivation, the catalytic reactor is loaded with more catalyst than is initially needed to support complete or near-complete oxidation of the fuel vapor before the reactor outlet. Gradual catalyst deactivation is defined as the process whereby initially all the catalyst is active but over time an increasing portion of the catalyst becomes deactivated. For example, initially most of the conversion of the reactant occurs closer to the inlet of the reactor than the outlet - for example the reactant may be more than 50% converted in the first 30 or 40% of the reactor flow path, and the catalyst close to the outlet does not participate to any significant extent. As the activity of the catalyst in the first 30 to 40% of the reactor flow path begins to diminish, the reactants flow further down the reactor flow path before being converted to the desired products. Thus the active portion of the flow path gradually moves downstream until the end of life is reached and the catalyst has to be replaced.

Deactivation of the catalyst needs to be monitored so maintenance can be planned and scheduled. The temperature of the catalyst surface, the gas temperature along the flow path, or both are monitored to determine the extent of deactivation along the flow path. More specifically, a temperature drop below a threshold temperature indicates catalyst deactivation before that location along the flow path. The selection of location for the temperature sensor(s) along the flow path is determined by the desired amount of advance notice prior to maintenance.

Disclosed herein is a fuel tank inerting system, including: a catalytic reactor comprising an inlet, an outlet, a reactive flow path between the inlet and the outlet, a catalyst on the reactive flow path, and a temperature sensor located between the inlet and outlet, wherein the catalytic reactor is arranged to receive fuel from the fuel tank and air from an air source that are mixed to form a combined flow, and to react the combined flow along the reactive flow path to generate an inert gas. The inert gas thus produced desirably has an oxygen concentration less than in the air source, as a result of reaction with fuel, and preferably has an oxygen concentration low enough to prevent combustion or explosion, for example less than 12% oxygen by volume. The maximum temperature in the catalytic reactor, which we call the reaction temperature, is a function of the inlet temperature and the heat of combustion for the combined flow of fuel and air.

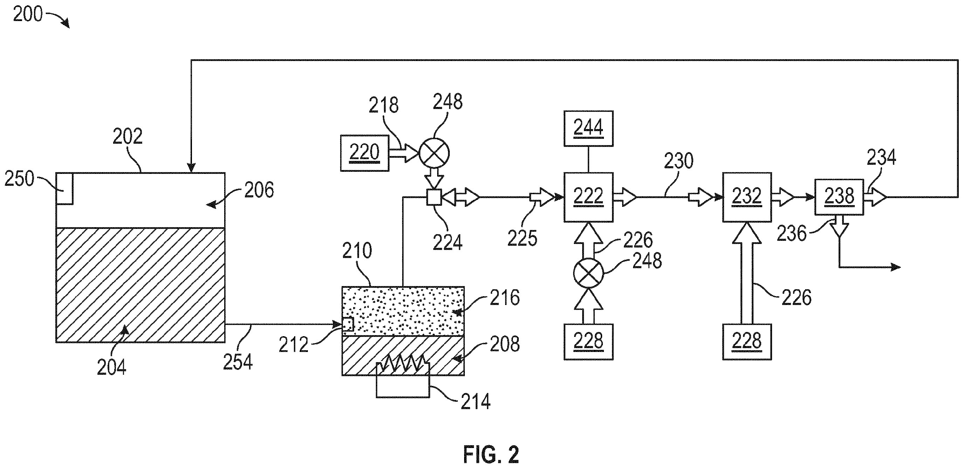

FIG. 2 is a schematic illustration of a flammability reduction or inerting system 200 utilizing a catalytic reaction to produce inert gas in accordance with an embodiment of the present disclosure. The inerting system 200, as shown, includes a fuel tank 202 having fuel 204 therein. As the fuel 204 is consumed during operation of one or more engines, an ullage space 206 forms within the fuel tank 202. To reduce flammability risks associated with vaporized fuel that may form within the ullage space 206, an inert gas can be generated and fed into the ullage space 206.

In accordance with embodiments of the present disclosure, an inerting fuel 208 can be extracted from the fuel tank 202 and into an evaporator container 210. The amount of fuel 204 that is extracted into the evaporator container 210 (i.e., the amount of inerting fuel 208) can be controlled by an evaporator container valve 212, such as a float valve. The inerting fuel 208, which may be in liquid form when pulled from the fuel tank 202, can be vaporized within the evaporator container 210 using a heater 214, such as an electric heater, to generate a first reactant 216. The first reactant 216 is a vaporized portion of the inerting fuel 208 located within the evaporator container 210. The first reactant 216 is mixed with a second reactant 218 which is sourced from a second reactant source 220. The second reactant 218 is air containing oxygen that is catalyzed with the first reactant 216 to generate an inert gas to be supplied into the ullage space 206 of the fuel tank 202. The second reactant 218 can come from any source on an aircraft that is at a pressure greater than ambient, including, but not limited to bleed air from an engine, cabin air, high pressure air extracted or bled from an engine, etc. (i.e., any second reactant source 220 can take any number of configurations and/or arrangements). The first reactant 216 within the evaporator container 210 and the second reactant 218 can be directed into a catalytic reactor 222 by and/or through a mixer 224, which, in some embodiments, may be an ejector or jet pump. The mixer 224 will mix the first and second reactants 216, 218 into a mixed air stream 225.

The catalytic reactor 222 can be temperature controlled to ensure a desired chemical reaction efficiency such that an inert gas can be efficiently produced by the inerting system 200 from the mixed air stream 225. Accordingly, cooling air 226 can be provided to extract heat from the catalytic reactor 222 to achieve a desired thermal condition for the chemical reaction within the catalytic reactor 222. The cooling air 226 can be sourced from a cool air source 228. A catalyzed mixture 230 leaves the catalytic reactor 222 and is passed through a heat exchanger 232. The heat exchanger 232 operates as a condenser on the catalyzed mixture 230 to separate out an inert gas 234 and a byproduct 236. A cooling air is supplied into the heat exchanger 232 to achieve the condensing functionality. In some embodiments, as shown, a cooling air 226 can be sourced from the same cool air source 228 as that provided to the catalytic reactor 222, although in other embodiments the cool air sources for the two components may be different. The byproduct 236 may be liquid water or water vapor, and thus in the present configuration shown in FIG. 2, a water separator 238 is provided downstream of the heat exchanger 232 to extract the liquid water or water vapor from the catalyzed mixture 230, thus leaving only the inert gas 234 to be provided to the ullage space 206 of the fuel tank 202.

The inerting system 200 can include additional components including, but not limited to, a fan, a flame arrestor, and a controller 244. Various other components can be included without departing from the scope of the present disclosure. In some embodiments, the inerting system 200 can supply inert gas to multiple fuel tanks on an aircraft.

Catalysts are subject to deactivation due to the presence of certain elements (e.g., sulfur) in the feed gas, including the fuel. Monitoring catalyst deactivation can be useful to determine when catalyst regeneration or replacement is necessary or when catalyst regeneration or replacement should be performed. At least one temperature sensor can be used in the catalytic reactor to measure catalyst activity (e.g, in catalytic reactor 222 of FIG. 2).

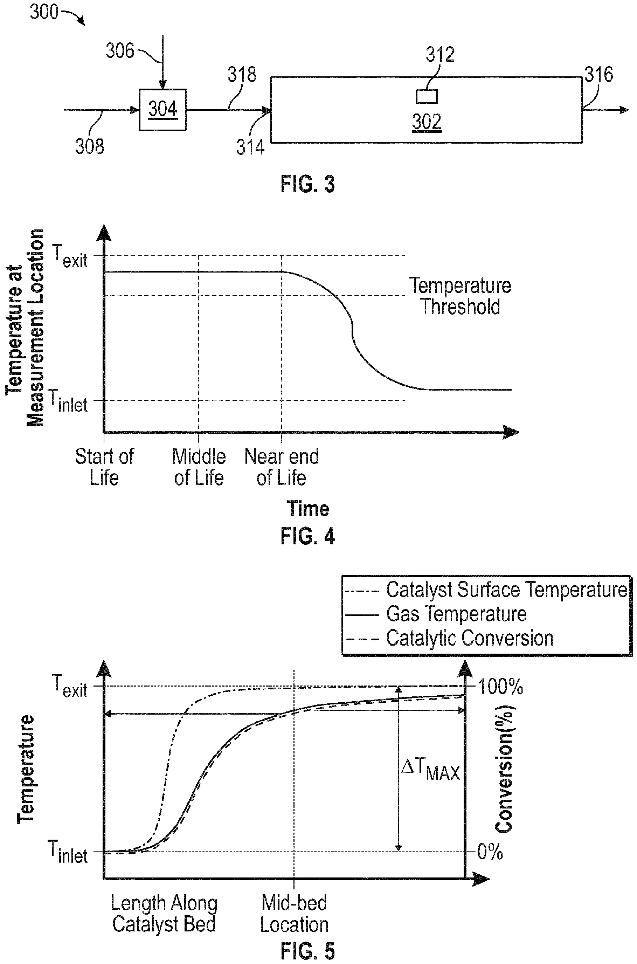

FIG. 3 shows a simplified version of a catalytic system 300 according to one embodiment. The system includes a catalytic reactor 302. The catalytic reactor 302 induces a chemical reaction between oxygen (second reactant 308) and fuel vapor (fuel source, first reactant 306) to produce carbon dioxide and water in the vapor phase. The source of the second reactant 308 (e.g., oxygen) used in the reaction can come from any source on the aircraft that is at a pressure greater than ambient. The fuel vapor (first reactant 306) is received either directly or indirectly from the aircraft fuel tank (e.g., fuel tank 202 in FIG. 2). The first and second reactants 306, 308, can be mixed in a mixing chamber 304 to form a combined flow 318 before being provided to the inlet 314 of the primary catalytic reactor 302. The catalyst is located in the catalytic reactor 302 and may be disposed on a support. The catalyst surface is defined as the surface of the catalyst/support combination.

The system 300 can include one or more temperature sensors 312. The temperature sensor can be located in the flow path, on the catalyst surface or in both locations. In any case the temperature sensor is located within the catalytic reactor at a location between the inlet 314 and the outlet 316 of the reactor. The temperature sensor may be located closer to the outlet than the inlet. In some embodiments multiple adjacent sensors are used for redundancy against failure. In some embodiments the temperature sensor comprises a thermocouple. As shown, the system 300 includes one temperature sensor. This is not meant to be limiting and other numbers of sensors could be provided. The temperature sensor is in operable communication with controller 244. By comparing the readings of the sensor(s) to a threshold temperature, a status of the catalyst in the reactor 302 can be determined. Such a status can be used for scheduling maintenance and/or scheduling catalyst regeneration timing.

An example is illustrative. Based on either prior or modelled sensor readings from the temperature sensor 312, a catalyst deactivation model can be created for the catalytic reactor 302. For example, when multiple temperature sensors are used and located at regular intervals along the flow path the progression of the temperature decrease can have predictive value, especially when different fuel sources or different air sources, having different deactivating elements, can affect the activity of the catalyst.

FIG. 4 shows a graph of catalytic temperature over time at a single location. Near the end of catalyst life the temperature decreases and when the temperature falls below the temperature threshold the controller recognizes the need for replacement and/or regeneration, or for scheduling of maintenance. The threshold temperature may be defined in relationship to the reaction temperature. For example, the threshold temperature may be 80% of the reaction temperature, or 70% of the reaction temperature, or 60% of the reaction temperature. In some embodiments the temperature sensor is located closer to the outlet than the inlet and the threshold temperature is 80%, 70%, or 60% of the reaction temperature. In some embodiments the temperature sensor is located closer to the inlet than the outlet and the threshold temperature is 60%, 50%, or 40% of the reaction temperature.

The reaction temperature is defined as the maximum temperature of the measured feature. For example, if the reaction mixture temperature (the gas temperature) is being measured then the reaction temperature is the maximum temperature of the reaction mixture. If the catalyst surface is being measured then the reaction temperature is the maximum temperature of the catalyst surface.

A catalyzed reaction in a catalyst bed can be either kinetically limited or mass transfer limited. The type of limitation generally depends on the form of the catalyst/catalyst support system. When the catalyst bed comprises pellets and/or screens the catalyzed reaction is typically kinetically limited. The temperature of the reaction mixture (the gas temperature) is typically quite similar to the temperature of the catalyst surface throughout the reaction. When the catalyst bed comprises a monolithic honeycomb the catalyzed reaction is typically mass transfer limited and the temperature of the catalyst surface increases much more rapidly than the reaction mixture although as the reaction progresses the reaction mixture temperature approaches the temperature of the catalyst surface.

FIG. 5 is a graph showing the temperature changes and catalytic conversion percentage for a mass transfer limited catalyzed reaction. As can be seen from the graph the catalyst surface temperature increase much more quickly than the gas temperature (reaction mixture temperature). The catalytic conversion closely tracks the gas temperature.

The choice of temperature sensor quantity, type (gas or catalyst surface) and location along the catalyst bed may be made depending on a number of factors. These factors include whether the reaction is mass transfer limited or kinetically limited, the pattern of use (long engine run times vs. short engine run times), and the desired amount of warning before maintenance is required.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A fuel tank inerting system, comprising:
a catalytic reactor (222, 302) comprising an inlet (314), an outlet (316), a reactive flow path between the inlet and the outlet, a catalyst on the reactive flow path, a temperature sensor (312) located between the inlet and outlet and in operable communication with a controller (244), and a heat exchanger (232) arranged, in use, between the outlet and an ullage space of a fuel tank, wherein the catalytic reactor is arranged to receive fuel vapor (216) from a fuel source (210) and air (218) from an air source (220) that are mixed to form a combined flow, and to react the combined flow along the reactive flow path to generate a catalyzed mixture comprising an inert gas, the catalyzed mixture being separated in the heat exchanger to the inert gas and a byproduct, wherein the inert gas can be provided to the ullage space of the fuel tank.

2. The fuel tank inerting system of claim 1, wherein the temperature sensor is located in the reactive flow path.

3. The fuel tank inerting system of claim 1, wherein the temperature sensor is located on the catalyst surface.

4. The fuel tank inerting system of claim 1, 2 or 3, wherein the catalytic reactor comprises an additional temperature sensor.

5. The fuel tank inerting system of any one of claims 1 or 4, wherein the temperature sensor is located closer to the outlet than the inlet.

6. A method for managing the maintenance of the fuel tank inerting system of any of claims 1 to 5 comprising reacting a mixture of fuel vapor (216) and air (218) in the presence of the catalyst at a reaction temperature; measuring a temperature of the catalyst surface or a temperature of the mixture at a location between the inlet (314) and the outlet (316) of the catalytic reactor (222, 302); comparing the measured temperature to a threshold temperature; and scheduling maintenance of the catalyst if the measured temperature is less than the threshold temperature.

7. The method of claim 6, wherein the temperature is measured at a location closer to the inlet than the outlet.

8. The method of claim 7, wherein the threshold temperature is 60% of the reaction temperature; or
wherein the threshold temperature is 50% of the reaction temperature.

9. The method of claim 6, further comprising measuring a temperature of the catalyst at a second location between the inlet and the outlet.

10. The method of claim 6, wherein the temperature of the mixture is measured and the threshold temperature is 80% of the reaction temperature; or
wherein the threshold temperature is 70% of the reaction temperature; or
wherein the threshold temperature is 60% of the reaction temperature.

## Patentansprüche

1. Inertisierungssystem für Kraftstofftanks, umfassend:
einen katalytischen Reaktor (222, 302), der einen Einlass (314), einen Auslass (316), einen reaktiven Strömungsweg zwischen dem Einlass und dem Auslass, einen Katalysator auf dem reaktiven Strömungsweg, einen Temperatursensor (312), der sich zwischen dem Einlass und dem Auslass befindet und in Wirkkommunikation mit einer Steuerung (244) steht, und einen Wärmetauscher (232) umfasst, der bei Verwendung zwischen dem Auslass und einem Leerraum eines Kraftstofftanks angeordnet ist, wobei der katalytische Reaktor angeordnet ist, um Kraftstoffdampf (216) von einer Kraftstoffquelle (210) und Luft (218) von einer Luftquelle (220) zu empfangen, die gemischt werden, um eine kombinierte Strömung auszubilden, und um auf die kombinierte Strömung entlang des reaktiven Strömungswegs zu reagieren, um ein katalysiertes Gemisch zu erzeugen, das ein Inertgas umfasst, wobei das katalysierte Gemisch in dem Wärmetauscher in das Inertgas und ein Nebenprodukt aufgespalten wird, wobei dem Leerraum des Kraftstofftanks das Inertgas bereitgestellt werden kann.

2. Inertisierungssystem für Kraftstofftanks nach Anspruch 1, wobei sich der Temperatursensor in dem reaktiven Strömungsweg befindet.

3. Inertisierungssystem für Kraftstofftanks nach Anspruch 1, wobei sich der Temperatursensor auf der Katalysatoroberfläche befindet.

4. Inertisierungssystem für Kraftstofftanks nach Anspruch 1, 2 oder 3, wobei der katalytische Reaktor einen zusätzlichen Temperatursensor umfasst.

5. Inertisierungssystem für Kraftstofftanks nach einem der Ansprüche 1 oder 4, wobei sich der Temperatursensor näher an dem Auslass als an dem Einlass befindet.

6. Verfahren zur Verwaltung der Wartung des Inertisierungssystems für Kraftstofftanks nach einem der Ansprüche 1 bis 5, umfassend Reagieren eines Gemischs von Kraftstoffdampf (216) und Luft (218) bei Vorhandensein des Katalysators bei einer Reaktionstemperatur; Messen einer Temperatur der Katalysatoroberfläche oder einer Temperatur des Gemischs an einer Stelle zwischen dem Einlass (314) und dem Auslass (316) des katalytischen Reaktors (222, 302); Vergleichen der gemessenen Temperatur mit einer Schwellentemperatur; und Planen einer Wartung des Katalysators, wenn die gemessene Temperatur geringer als die Schwellentemperatur ist.

7. Verfahren nach Anspruch 6, wobei die Temperatur an einer Stelle näher an dem Einlass als an dem Auslass gemessen wird.

8. Verfahren nach Anspruch 7, wobei die Schwellentemperatur 60 % der Reaktionstemperatur ist; oder
wobei die Schwellentemperatur 50 % der Reaktionstemperatur ist.

9. Verfahren nach Anspruch 6, ferner umfassend Messen einer Temperatur des Katalysators an einer zweiten Stelle zwischen dem Einlass und dem Auslass.

10. Verfahren nach Anspruch 6, wobei die Temperatur des Gemischs gemessen wird und die Schwellentemperatur 80 % der Reaktionstemperatur ist; oder
wobei die Schwellentemperatur 70 % der Reaktionstemperatur ist; oder
wobei die Schwellentemperatur 60 % der Reaktionstemperatur ist.

## Revendications

1. Système d'inertage de réservoir de carburant, comprenant :
un réacteur catalytique (222, 302) comprenant une entrée (314), une sortie (316), un chemin d'écoulement réactif entre l'entrée et la sortie, un catalyseur sur le chemin d'écoulement réactif, un capteur de température (312) situé entre l'entrée et sortie et en communication fonctionnelle avec un dispositif de commande (244), et un échangeur de chaleur (232) agencé, en service, entre la sortie et un espace vide d'un réservoir de carburant, dans lequel le réacteur catalytique est agencé pour recevoir de la vapeur de carburant (216) depuis une source de carburant (210) et de l'air (218) depuis une source d'air (220) qui sont mélangés pour former un écoulement combiné, et pour faire réagir l'écoulement combiné le long du chemin d'écoulement réactif afin de générer un mélange catalysé comprenant un gaz inerte, le mélange catalysé étant séparé dans l'échangeur de chaleur en gaz inerte et en un sous-produit, dans lequel le gaz inerte peut être fourni à l'espace vide du réservoir de carburant.

2. Système d'inertage de réservoir de carburant selon la revendication 1, dans lequel le capteur de température est situé dans le chemin d'écoulement réactif.

3. Système d'inertage de réservoir de carburant selon la revendication 1, dans lequel le capteur de température est situé sur la surface de catalyseur.

4. Système d'inertage de réservoir de carburant selon la revendication 1, 2 ou 3, dans lequel le réacteur catalytique comprend un capteur de température supplémentaire.

5. Système d'inertage de réservoir de carburant selon l'une quelconque des revendications 1 ou 4, dans lequel le capteur de température est situé plus près de la sortie que de l'entrée.

6. Procédé de gestion de la maintenance du système d'inertage de réservoir de carburant selon l'une quelconque des revendications 1 à 5, comprenant la mise en réaction d'un mélange de vapeur de carburant (216) et d'air (218) en présence du catalyseur à une température de réaction ; la mesure d'une température de la surface de catalyseur ou d'une température du mélange au niveau d'un emplacement entre l'entrée (314) et la sortie (316) du réacteur catalytique (222, 302) ; la comparaison de la température mesurée avec une température seuil ; et la programmation de la maintenance du catalyseur si la température mesurée est inférieure à la température seuil.

7. Procédé selon la revendication 6, dans lequel la température est mesurée au niveau d'un emplacement plus proche de l'entrée que de la sortie.

8. Procédé selon la revendication 7, dans lequel la température seuil représente 60 % de la température de réaction ; ou
dans lequel la température seuil représente 50 % de la température de réaction.

9. Procédé selon la revendication 6, comprenant en outre la mesure d'une température du catalyseur au niveau d'un second emplacement entre l'entrée et la sortie.

10. Procédé selon la revendication 6, dans lequel la température du mélange est mesurée et la température seuil représente 80 % de la température de réaction ; ou
dans lequel la température seuil représente 70 % de la température de réaction ; ou
dans lequel la température seuil représente 60 % de la température de réaction.
